# EUROPEAN PATENT SPECIFICATION

(11) **EP 3 240 274 B1**
(45) Date of publication and mention of the grant of the patent: **03.06.2020**
(21) Application number: 16167243.1
(22) Date of filing: 27.04.2016
(51) Int. Cl.: H04M 3/42, H04M 3/533

(54) **METHOD FOR AN ENHANCED CALL ANSWERING AND/OR CALL HANDLING FUNCTIONALITY RELATED TO A CALLED PARTY IN A TELECOMMUNICATIONS NETWORK, AND TELECOMMUNICATIONS NETWORK**
VERFAHREN FÜR EINE VERBESSERTE ANRUFBEANTWORTUNGS- UND/ODER ANRUFHANDHABUNGSFUNKTIONALITÄT IM ZUSAMMENHANG MIT EINER ANGERUFENEN PARTEI IN EINEM TELEKOMMUNIKATIONSNETZWERK SOWIE TELEKOMMUNIKATIONSNETZWERK
PROCÉDÉ PERMETTANT D'AMÉLIORER UN RÉPONDEUR D'APPEL ET/OU UNE FONCTIONNALITÉ DE TRAITEMENT D'APPEL ASSOCIÉ À UN APPELÉ DANS UN RÉSEAU DE TÉLÉCOMMUNICATIONS ET UN TEL RÉSEAU

(43) Date of publication of application: 01.11.2017
(73) Proprietor: Deutsche Telekom AG, 53113 Bonn (DE)
(72) Inventor: SONNTAG, Thomas, 53343 Wachtberg (DE)
(74) Representative: Schwöbel, Thilo K.

(56) References cited:
- GB-A- 2 318 702
- US-A- 5 850 435
- US-A1- 2003 035 526
- US-A1- 2015 350 419
- US-B1- 6 590 965

## Description

### BACKGROUND

The present invention relates inter alia to a method for an enhanced call answering and/or call handling functionality related to a called party in a telecommunications network, wherein a call is initiated by a calling party, the call being directed to the called party; wherein especially the called party is unable to take the call.

Furthermore, the present invention relates to a method for storing an input information in view of conducting a method for an enhanced call answering and/or call handling functionality related to a called party in a telecommunications network.

Additionally, the present invention relates to a telecommunications network for an enhanced call answering and/or call handling functionality related to a called party, wherein especially the called party is unable to take the call.

Furthermore, the present invention relates to a program comprising a computer readable program code and a computer program product for an enhanced call answering and/or call handling functionality related to a called party in a telecommunications network.

Conventionally, network operators - especially network operators operating mobile communication network but also fixed line telecommunications networks - provide the possibility to their clients or subscribers that messages (typically of callers trying to reach one of the subscribers of the telecommunications network) are stored that can be accessed by the respective subscriber (i.e. the called party) later on. Typically such services are realized as follows: In case that a call is not taken by a called party, the calling party is often allowed to leave a message for the called party, typically in a service called speech box or mail box or the like. The message can be a speech message or a text message such as a short message of a Short Message Service within typically a mobile communication network (SMS-Service), or an e-mail message. Even in case that the calling party does not leave a message, the answering service of the telecommunications network (or speech box service) typically stores the telephone number of the calling party as well as a time stamp of the time when the call has been initiated. The called party is then able to retrieve the respective information regarding missed calls from the answering machine service (or speech box or mail box service) of the telecommunications network, e.g. by means of calling that service or the respective phone number.

The drawback of conventionally available answering machine services is that - in case that the called party does not know the telephone number of the calling party (i.e. the party having attempted to reach the called party or having left a message), it is not possible or at least difficult to identify the calling party. Many persons do not even know the telephone numbers of known persons by heart.

US 6 590 965 B1 discloses a method for recording an audible indication of the caller's name in a voice mail system, but does not propose to make the name indication customizable by the called party, dependent on calling and called identities.

US 2015/350419 A1 discloses a method for the customization of ring tones, dependent on calling and called identities.

### SUMMARY

An object of the present invention is to provide a method for an enhanced call answering and/or call handling functionality related to a called party in a telecommunications network, wherein especially the called party is unable to take the call, such that call answering and/or call handling is enhanced and more convenient to the called party.

The object of the present invention is achieved by a method for an enhanced call answering and/or call handling functionality related to a called party in a telecommunications network, wherein a call is initiated by a calling party, the call being directed to the called party, wherein the call is initiated by means of transmitting a call initiation message to the telecommunications network of the called party or within the telecommunications network, wherein especially the called party is unable to take the call,
wherein a first identification information is assigned to or associated with the calling party and wherein a second identification information is assigned to or associated with the called party,
wherein initiating the call involves transmitting the first identification information to the telecommunications network of the called party or within the telecommunications network, or to a service node of the telecommunications network of the called party, or to the called party,
wherein the method comprises the following steps:
-- in a first step, the call initiation message is received by the telecommunications network or within the telecommunications network, and the first identification information is received by the telecommunications network of the called party or by the service node of the telecommunications network of the called party or by the called party, and the call is forwarded to the service node of the telecommunications network, and the service node being an answering machine service node
-- in a second step, subsequent to the first step, a name-related information is determined, the name-related information being
   -- dependent on both the first identification information and the second identification information, or
   -- being related to an input information provided by the called party or by a user of a terminal device associated with the called party, the input information being related to the first identification information only, or to both the first identification information and the second identification information,
-- in a third step, subsequent to the second step, the name-related information is transmitted to the telecommunications network of the called party or to the service node of the telecommunications network of the called party or to the called party in view of being output as an audible output by the terminal device associated with the called party.

According to the present invention it is thereby advantageously possible to enable a call answering functionality such that call answering and/or call handling is enhanced from the perspective of a user of this service - especially more convenient - for the called party.

Furthermore, it is advantageously possible according to the present invention, that - especially in case that the name-related information is determined dependent on both the first identification information and the second identification information, i.e. according to a second embodiment of the present invention - the name-related information is able to be provided to the called party (at retrieving the mailbox content) in spoken form (or as a speech information) in case that the name-related information has been stored by the called party and previously to the considered call.

Furthermore, it is advantageously possible according to the present invention, that - especially in case that the name-related information is related to an input information provided by the called party or by a user of a terminal device associated with the called party, i.e. according to a third embodiment - the name-related information is able to be defined (in speech form (i.e. as a speech information) or in text form (i.e. as a text information)) by the called party, either at retrieving the mailbox content or at a later point in time.

According to the present invention, the telecommunications network (used in the inventive method) is a mobile telecommunications network or a fixed line telecommunications network or a telecommunications network comprising both a mobile communication network and a fixed line telecommunications network. Such telecommunications networks typically comprise an access network and a core network, for providing communication services to users of the telecommunications network, such as mobile devices (or user equipments) or fixed line devices. Generally, the term terminal is used for such end user devices.

Furthermore according to the present invention, it is preferred that the name-related information is determined by means of a reverse search based on the first identification information.

By means of determining the name-related information by means of a reverse search based on the first identification information, it is advantageously possible to determine a name-related information for virtually every calling party, i.e. both persons as calling parties that are known to the called party and persons that are not known to the called party (or the user or client representing the called party).

According to the present invention, it is furthermore preferred that the name-related information is determined based on the input information - especially related to a previously occurred call - provided by the called party or by the user of the terminal device associated with the called party, wherein the input information is related to:
-- the first identification information only, or
-- to both the first identification information and the second identification information, and
wherein the input information is stored as the name-related information by the telecommunications network of the called party or by the service node of the telecommunications network of the called party or by the called party.

By means of determining the name-related information based on the input information already present to the call answering functionality (i.e. related to a previously occurred call) - the input information being related, according to a variant of the present invention, to the first identification information only -, it is advantageously possible according to the present invention to use the input information (provided by the called party at a given point in time and with respect to a call from the calling party to a specific called party) also for other call events occurring subsequently, i.e. especially for call events (or calls) that are directed to other called parties (than the initial called party providing the input information).

By means of determining the name-related information based on the input information already present to the call answering functionality (i.e. related to a previously occurred call) - the input information being related, according to a further variant of the present invention, to both the first identification information and the second identification information -, it is advantageously possible according to the present invention to use the input information (provided by the called party) for a personalized functionality of the inventive call answering method, i.e. the called party is able to provide the input information with regard to one or a plurality of specific calling identification information (especially one or a plurality of telephone number(s) of calling parties) such that the special name-related information is determined that corresponds to the pair of the first identification information and the second identification information, typically the pair of the telephone number of the calling party, and the telephone number of the called party.

Furthermore, it is preferred according to the present invention that the input information is input by the called party or by the user of the terminal device associated with the called party either in form of a speech information or in form of a text information, and wherein - in case that the input information is input in form of a text information - the input information is stored as a speech information or as a text information.

By means of inputting the input information in form of a speech information or in form of a text information, it is advantageously possible according to the present invention that the input information can be provided in a flexible manner. The method and the inventive telecommunications network might be provided such (or configured such) that the input information is necessarily provided in form of a speech information or alternatively in form of a text information. However, the method and the inventive telecommunications network might also be provided such (or configured such) that the input information could be provided in both manners, based upon a choice of the called party.

Furthermore according to the present invention, it is preferred that the name-related information corresponds to a speech information that is able to be directly output as the audible output of the terminal device.

By means of the name-related information corresponding to a speech information or being a speech information (that is able to be directly output as the audible output of the terminal device), it is advantageously possible according to the present invention that no conversion or translation or speech synthesizing is required any more as the speech information is able to directly output by the terminal device.

Still furthermore, it is possible according to the present invention that the name-related information corresponds to a text information that is transmitted to the telecommunications network of the called party or to the service node of the telecommunications network of the called party or to the called party, wherein a speech information is generated, based on the text information, by a synthesizing entity or by a synthesizing module either
-- of the telecommunications network of the called party, or
-- of the service node of the telecommunications network of the called party, or
-- of the called party.

Thereby, it is advantageously possible that the text information can be stored easily and requiring comparatively lower memory demands.

Furthermore, the present invention relates to a method for storing an input information in view of conducting a method according to one of the preceding claims and especially in view of determining the name-related information, according to the second step, based on an input information,
wherein the input information is provided, previously to the call, by the called party or by the user of the terminal device associated with the called party or by another party of the telecommunications network, wherein the input information is related to:
-- the first identification information only, or
-- to both the first identification information and the second identification information, and
wherein the input information is stored as the name-related information by the telecommunications network of the called party or by the service node of the telecommunications network of the called party or by the called party.

In order for the inventive method for an enhanced call answering and/or call handling functionality being able to be used by the called party upon an incoming call, it is advantageous to have input the input information prior to the considered call happens. In this case, the second step of the inventive method for an enhanced call answering and/or call handling functionality (namely to determine the name-related information, especially in case this corresponds to the input information) is able to be performed based on the input information that has been previously input.

Thereby, it is advantageously possible that the call answering functionality can be configured (by the subscriber or the client of the (subsequently) called party) by means of providing the input information regarding the most frequent calling parties.

The present invention also relates to a telecommunications network for an enhanced call answering and/or call handling functionality related to a called party,
wherein a call is initiated by a calling party, the call being directed to the called party,
wherein the call is initiated by means of transmitting a call initiation message to the telecommunications network of the called party or within the telecommunications network,
wherein especially the called party is unable to take the call,
wherein a first identification information is assigned to or associated with the calling party and wherein a second identification information is assigned to or associated with the called party,
wherein initiating the call involves transmitting the first identification information to the telecommunications network of the called party or within the telecommunications network, or to a service node of the telecommunications network of the called party, or to the called party,
wherein the telecommunications network is configured such that:
-- the call initiation message is received by the telecommunications network or within the telecommunications network, and the first identification information is received by the telecommunications network of the called party or by the service node of the telecommunications network of the called party or by the called party, and the call being forwarded to the service node of the telecommunications network, and the service node being an answering machine service node,
-- a name-related information is determined, the name-related information being
   -- dependent on both the first identification information and the second identification information, or
   -- being related to an input information provided by the called party or by a user of a terminal device associated with the called party or by another party of the telecommunications network, the input information being related to the first identification information only, or to both the first identification information and the second identification information,
-- the name-related information is transmitted to the telecommunications network of the called party or within the telecommunications network or to the service node of the telecommunications network of the called party or to the called party in view of being output as an audible output by the terminal device associated with the called party.

According to the present invention it is thereby advantageously possible that call answering and/or call handling is enhanced from the perspective of a user.

According to the present invention - also with respect to the telecommunications network - it is preferred that the telecommunications network is configured such that the name-related information is determined by means of a reverse search based on the first identification information.

Furthermore according to the present invention - also with respect to the telecommunications network - it is preferred that the telecommunications network is configured such that the name-related information is determined based on the input information - especially related to a previously occurred call - provided by the called party or by the user of the terminal device associated with the called party, wherein the input information is related to:
-- the first identification information only, or
-- to both the first identification information and the second identification information, and
wherein the input information is stored as the name-related information by the telecommunications network of the called party or by the service node of the telecommunications network of the called party or by the called party.

Additionally - also with respect to the telecommunications network - the service node of the telecommunications network is an answering machine service node.

Additionally - also with respect to the telecommunications network - it is preferred that the name-related information corresponds to a speech information that is able to be directly output as the audible output of the terminal device or wherein the name-related information corresponds to a text information that is transmitted to the telecommunications network of the called party or to the service node of the telecommunications network of the called party or to the called party, wherein the telecommunications network is configured such that a speech information is generated, based on the text information, by a synthesizing entity or by a synthesizing module either
-- of the telecommunications network of the called party, or
-- of the service node of the telecommunications network of the called party, or
-- of the called party.

Furthermore, the present invention relates to a program comprising a computer readable program code which, when executed on a computer and/or on a network node of a telecommunications network, and/or on a service node of the telecommunications network, especially an answering machine service node, and/or on a terminal device associated with the called party, especially in part on the network node of the telecommunications network and/or in part on the service node of the telecommunications network and/or in part on the terminal device associated with the called party, causes the computer and/or the network node of the telecommunications network and/or the service node of the telecommunications network, and/or the terminal device associated with the called party to perform the inventive method.

The present invention also relates to computer program product for an enhanced call answering and/or call handling functionality related to a called party in a telecommunications network, the computer program product comprising a computer program stored on a storage medium, the computer program comprising program code which, when executed on a computer and/or on a network node of a telecommunications network, and/or on a service node of the telecommunications network, especially an answering machine service node, and/or on a terminal device associated with the called party, especially in part on the network node of the telecommunications network and/or in part on the service node of the telecommunications network and/or in part on the terminal device associated with the called party, causes the computer and/or the network node of the telecommunications network and/or the service node of the telecommunications network, and/or the terminal device associated with the called party to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

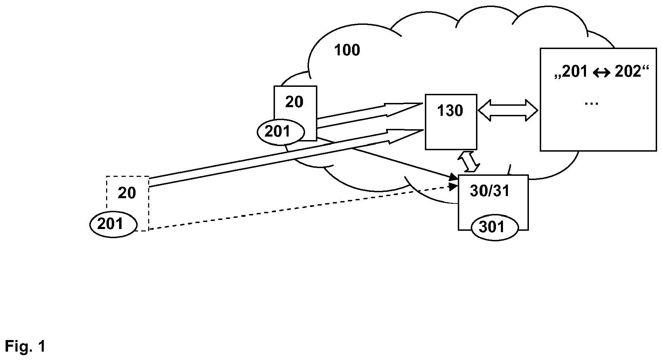

Figure 1 schematically illustrates a telecommunications network comprising a call answering functionality according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising a call answering functionality according to the present invention is schematically shown. The telecommunications network 100 might be a mobile communication network (or a public land mobile network), or a fixed line telecommunications network, or a telecommunications network having both fixed line network parts and parts corresponding to a mobile communication network.

According to the present invention, a calling party 20 calls a called party 30 in the telecommunications network 100, i.e. the called party is a client of or a subscriber of or is currently served by the telecommunications network 100. The calling party 20 is either also in (or within or linked to) the telecommunications network 100 (of the called party 30) (corresponding to the calling party 20 being represented in drawn-through lines in Figure 1), or the calling party 20 is outside of the telecommunications network 100 (of the called party 30), i.e. belongs to (or is a client of or is a subscriber of or is currently served by) another telecommunications network (corresponding to the calling party 20 being represented in dashed lines in Figure 1; the other telecommunications network is not shown in Figure 1).

Typically, a call (from the calling party 20 to the called party 30) is initiated by the calling party 20, and the call is directed to the called party 30, wherein the call is initiated by means of transmitting a call initiation message to the telecommunications network 100 of the called party 30 or within the telecommunications network 100. This means that the call needs to be signaled somehow, i.e. in case the calling party 20 is located in another telecommunications network (different from the telecommunications network 100, and typically operated by another operator than the operator of the telecommunications network 100), the call needs to be routed to the telecommunications network 100, and in case that the calling party 20 is located within the telecommunications network 100, the call needs to be routed within the telecommunications network 100.

According to the present invention, the call answering functionality typically assumes that the called party 30 is unable to take the call initiated by the calling party 20. This might be due to the user corresponding to the called party 30 not being available to take the call or due to non-availability of radio coverage of the called party 30 at the time of the call or due to another reason.

Furthermore according to the present invention, a first identification information 201 is assigned to the calling party 20. Typically the first identification information corresponds to a telephone number or a mobile telephone number or a SIP (Session Initiation Protocol) identity or any other kind of identification or identity information of the calling party 20, typically retrievable from a telephone directory or another database repository.

Likewise, a second identification information 301 is assigned to the called party 30. Typically the second identification information corresponds to a telephone number or a mobile telephone number or a SIP (Session Initiation Protocol) identity or any other kind of identification or identity information of the called party 30, typically retrievable from a telephone directory or another database repository. According to a preferred embodiment of the present invention, the first and second identification information 201, 301 are of the same type of an identification information (such as, e.g., a telephone number), however, the first and second identification information do not necessarily need to be of the same type of an identification information.

When conducting the call, the first identification information 201 is transmitted to the telecommunications network 100 of the called party 30 or within the telecommunications network 100, or to a service node 130 of the telecommunications network 100 of the called party 30, or to the called party 30. Typically, a service node 130 provides the call answering functionality, and, hence, in case that it is determined that the call cannot be taken by the called party 30, it is typically directed somehow to the service node 130. However, the non-availability of the called party 30 might already be established at an early stage of the call forwarding procedure, typically triggering that the call is directly routed to the service node 130 of the telecommunications network 100. In case that the non-availability of the called party 30 is established only comparatively late (during the call forwarding procedure), the call might arrive at the called party (or at the terminal of the called party 30) first, and then forwarded to the service node 130.

In any case, according to the present invention, the inventive method involves a first step during which a call initiation message is received by the telecommunications network 100 or within the telecommunications network 100 such that the first identification information 201 is received by the telecommunications network 100 of the called party 30 or by the service node 130 of the telecommunications network 100 of the called party 30 or by the called party 30 itself.

According to a second step of the inventive method, a name-related information 202 is determined, the name-related information 202 being linked to the name of the calling party 20, i.e. the name-related information 202 is typically retrievable from a directory or database repository. According to different embodiments of the present invention, the name-related information 202 is either dependent on the first identification information 201 only, or it is dependent on both the first identification information 201 and the second identification information 301, or it is related to an input information provided by the called party 30 or by a user of a terminal device 31 associated with the called party 30.

In a third step of the inventive method, the name-related information 202 is transmitted to the telecommunications network 100 of the called party 30 or to the service node 130 of the telecommunications network 100 of the called party 30 or to the called party 30 in view of being output as an audible output by the terminal device 31 associated with the called party 30.

Typically, a call answering service supposes that the line of the called party 30 is configured such that a call that cannot be answered is forwarded to a service node 130 of a speech box or mail box or the like. However, it is also possible that the service node 130 records the call despite the fact the called party accepts the call.

According to an exemplary embodiment according to the present invention, a call comprises at least the following pieces of information:
-- a time stamp of the call (or time information of the call),
-- the telephone number of the calling party 20 (as an example of the first identification information 201),
-- the telephone number of the called party 30 (as an example of the second identification information 301), as well as,
-- optionally, a message or message content (which can be empty in case that the calling party 20 did not leave a message with respect to the considered call).

The call answering functionality typically comprises the two main processing steps: in a first main processing step, the call of the calling party 20 is recorded, typically by the service node 130, and in a second main processing step, the call (or the respective pieces of information of the call) is retrieved by the called party 30 from the message box functionality or the speech box functionality, i.e. the service node 130 of the telecommunications network 100.

Typically, the first main processing step comprises three sub processing step, a first sup processing step where the calling party 20 dials the telephone number of the called party 30, a second sub processing step where the call is forwarded to the service node 130 (i.e. the message box or the speech box functionality of the telecommunications network 100), and a third sub processing step where the service node 130 stores the call (with its pieces of information).

Furthermore typically, the second main processing step also comprises three sub processing steps, a fourth sub processing step where the called party 30 dials the service node 130 (or the speech box or the message box), a fifth sub processing step where the service node 130 is determining all missed calls directed to the called party 30 (typically by means of the telephone number of the called party 30, i.e. the by means of the second identification information 301), and a sixth sub processing step where the called party retrieves the pieces of information for each missed call (i.e. (optionally) the time stamp (or time information of the call), the telephone number of the calling party 20 (i.e. the first identification information 201), the telephone number of the called party 30 (i.e. the second identification information 301), and, optionally, a message or message content.

According to at least an embodiment of the present invention, a reverse search functionality is implemented within the telecommunications network 100 (or available to a network node of the telecommunications network 100, especially the service node 130) such that - based on the first identification information, typically the telephone number of the calling party 20 - it is possible to retrieve the name (or a name-related information) of the calling party (i.e. the name associated with the first identification information (or telephone number of the calling party 20) that is stored or retrievable from a telephone directory or other database repository). Furthermore, a speech synthesizing functionality is implemented within the telecommunications network 100 (or available to a network node of the telecommunications network 100, especially the service node 130) such that - based on the name of the calling party 20 or based on the name-related information 202 - it is possible to generate a speech information corresponding to the name-related information 202, that is able to be output as an audible output by the terminal device 31 associated with the called party 30.

According to the present invention, it is possible and preferred according to different embodiments of the present invention that the name-related information 202 is determined or retrieved (by means of the reverse search functionality) during the first main processing step, or during the second main processing step.

According to the embodiment according to which the name-related information 202 is determined or retrieved during the first main processing step, the reverse search is preferably performed prior to performing the third sub processing step: Based on the telephone number of the calling party 20 (or the first identification information 201), the name-related information 202 is retrieved (typically in the form of a text information), and a speech information generated from the name-related information 202 which is stored together with the other pieces of information of the call. Hence, during the third sub processing step, the following pieces of information regarding the call are stored:
-- (optionally) the time stamp of the call (or time information of the call),
-- the telephone number of the calling party 20 (as an example of the first identification information 201),
-- the telephone number of the called party 30 (as an example of the second identification information 301),
-- the name-related information 202, especially the name-related information 202 at least as a speech information (the text information of the name-related information 202 being optional),
-- optionally, a message or message content (which can be empty in case that the calling party 20 did not leave a message with respect to the considered call).
Consequently, during the sixth sub processing step, it is possible to provide to the called party 30 (upon prompting of the message box) the following pieces of information of the call:
-- (optionally) the time stamp (or time information of the call),
-- (optionally) the telephone number of the calling party 20 (i.e. the first identification information 201),
-- the name-related information 202 as a speech information, and,
-- (optionally or if present or not empty), a message or message content.
In case that the content of the message is not a speech information but a text information, it is likewise possible to synthesize a speech information corresponding to the message of the call.
An advantage of the embodiment according to which the name-related information 202 is determined or retrieved during the first main processing step is that less delay might be involved in providing the pieces of information of the call to the called party 30.

According to the embodiment according to which the name-related information 202 is determined or retrieved during the second main processing step, the reverse search is preferably performed prior to performing the sixth sub processing step: Based on the telephone number of the calling party 20 (or the first identification information 201), the name-related information 202 is retrieved (typically in the form of a text information), and a speech information is generated from the name-related information 202 which is output together with the other pieces of information of the call. Hence, during the sixth sub processing step, the following pieces of information regarding the call are output:
-- (optionally) the time stamp of the call (or time information of the call),
-- (optionally) the telephone number of the calling party 20 (as an example of the first identification information 201),
-- the name-related information 202 as a speech information, and,
-- (optionally or if present or not empty), a message or message content.
In case that the content of the message is not a speech information but a text information, it is likewise possible to synthesize a speech information corresponding to the message of the call.
Optionally, the name-related information 202 as a speech information can be stored in a manner related to the call such that the name-related information 202 does not need to be retrieved (and, if applicable, a speech information needs to be generated from a text information) in case the call is retrieve another time from the service node 130.
An advantage of the embodiment according to which the name-related information 202 is determined or retrieved during the second main processing step is that a retrieval of the name-related information 202 does not need to be performed in case that the corresponding call is not retrieved from the message box (or from the service node 130 of the telecommunications network 100).

According to further embodiments of the present invention, an input information can be provided by the calling party 20, especially in case that a name-related information 202 is not possible to be retrieved based on the telephone number of the calling party 20 (or based on the first identification information 201) or in case that the corresponding speech information (synthesized from a retrieved name-related information 201) is not understood by the user of the called party 30 (i.e. the synthesizing of the speech information based on the text information of the name-related information 202 is not sufficient), or in case that the calling party 30 (or its user) prefers to provide an input information.

In all these cases, the present invention provides for the possibility for the called party to provide the input information, and to store the input information. The input information might be provided in text form or in speech form. Typically, the input information is provided in speech form, i.e. the input information is a speech information. Typically, the input information is assigned to the called party 30 that provides the input information. Hence, a tuple comprising the first identification information 201 (or telephone number of the calling party 20), the input information, and the second identification information 301 (or telephone number of the called party 30) is stored. In case that the same calling party 20 initiates a call to the same called party 30 (i.e. a subsequent call compared to the call in connection to which the input information has been provided by the called party 30), the stored input information (or name-related information 202 being dependent on both the first and second identification information 201, 301) is provided, in case that the service node 130 is prompted to provide the relevant pieces of information for that call, as the name-related information 202.

## Claims

1. Method for an enhanced call answering and/or call handling functionality related to a called party (30) in a telecommunications network (100), wherein a call is initiated by a calling party (20), the call being directed to the called party (30), wherein the call is initiated by means of transmitting a call initiation message to the telecommunications network (100) of the called party (30) or within the telecommunications network (100),
wherein especially the called party (30) is unable to take the call,
wherein a first identification information (201) is assigned to or associated with the calling party (20) and wherein a second identification information (301) is assigned to or associated with the called party (30),
wherein initiating the call involves transmitting the first identification information (201) to the telecommunications network (100) of the called party (30) or within the telecommunications network (100), or to a service node (130) of the telecommunications network (100) of the called party (30), or to the called party (30),
wherein the method comprises the following steps:
-- in a first step, the call initiation message is received by the telecommunications network (100) or within the telecommunications network (100), and the first identification information (201) is received by the telecommunications network (100) of the called party (30) or by the service node (130) of the telecommunications network (100) of the called party (30) or by the called party (30), and the call is forwarded to the service node (130) of the telecommunications network (100), and the service node (130) being an answering machine service node (130),
-- in a second step, subsequent to the first step, a name-related information (202) is determined, the name-related information (202) being
-- dependent on both the first identification information (201) and the second identification information (301), or
-- being related to an input information provided by the called party (30) or by a user of a terminal device (31) associated with the called party (30), the input information being related to the first identification information (201) only, or to both the first identification information (201) and the second identification information (202),
-- in a third step, subsequent to the second step, the name-related information (202) is transmitted to the telecommunications network (100) of the called party (30) or to the service node (130) of the telecommunications network (100) of the called party (30) or to the called party (30) in view of being output as an audible output by the terminal device (31) associated with the called party (30).

2. Method according to claim 1, wherein the name-related information (202) is determined by means of a reverse search based on the first identification information (201).

3. Method according to one of the preceding claims, wherein the name-related information (202) is determined based on the input information - especially related to a previously occurred call - provided by the called party (30) or by the user of the terminal device (31) associated with the called party (30), wherein the input information is related to:
-- the first identification information (201) only, or
-- to both the first identification information (201) and the second identification information (202), and
wherein the input information is stored as the name-related information (202) by the telecommunications network (100) of the called party (30) or by the service node (130) of the telecommunications network (100) of the called party (30) or by the called party (30).

4. Method according to one of the preceding claims, wherein the input information is input by the called party (30) or by the user of the terminal device (31) associated with the called party (30) either in form of a speech information or in form of a text information, and wherein - in case that the input information is input in form of a text information - the input information is stored as a speech information or as a text information.

5. Method according to one of the preceding claims, wherein the name-related information (202) corresponds to a speech information that is able to be directly output as the audible output of the terminal device (31).

6. Method according to one of the preceding claims, wherein the name-related information (202) corresponds to a text information that is transmitted to the telecommunications network (100) of the called party (30) or to the service node (130) of the telecommunications network (100) of the called party (30) or to the called party (30), wherein a speech information is generated, based on the text information, by a synthesizing entity or by a synthesizing module either
-- of the telecommunications network (100) of the called party (30), or
-- of the service node (130) of the telecommunications network (100) of the called party (30), or
-- of the called party (30).

7. Method for storing an input information in view of conducting a method according to one of the preceding claims and especially in view of determining the name-related information (202), according to the second step, based on an input information, wherein the input information is provided, previously to the call, by the called party (30) or by the user of the terminal device (31) associated with the called party (30) or by another party of the telecommunications network (100), wherein the input information is related to:
-- the first identification information (201) only, or
-- to both the first identification information (201) and the second identification information (202), and
wherein the input information is stored as the name-related information (202) by the telecommunications network (100) of the called party (30) or by the service node (130) of the telecommunications network (100) of the called party (30) or by the called party (30).

8. Telecommunications network (100) for an enhanced call answering and/or call handling functionality related to a called party (30), wherein a call is initiated by a calling party (20), the call being directed to the called party (30), wherein the call is initiated by means of transmitting a call initiation message to the telecommunications network (100) of the called party (30) or within the telecommunications network (100),
wherein especially the called party (30) is unable to take the call,
wherein a first identification information (201) is assigned to or associated with the calling party (20) and wherein a second identification information (301) is assigned to or associated with the called party (30),
wherein initiating the call involves transmitting the first identification information (201) to the telecommunications network (100) of the called party (30) or within the telecommunications network (100), or to a service node (130) of the telecommunications network (100) of the called party (30), or to the called party (30),
wherein the telecommunications network (100) is configured such that:
-- the call initiation message is received by the telecommunications network (100) or within the telecommunications network (100), and the first identification information (201) is received by the telecommunications network (100) of the called party (30) or by the service node (130) of the telecommunications network (100) of the called party (30) or by the called party (30), and the call being forwarded to the service node (130) of the telecommunications network (100), and the service node (130) being an answering machine service node (130),
-- a name-related information (202) is determined, the name-related information (202) being
-- dependent on both the first identification information (201) and the second identification information (301), or
-- being related to an input information provided by the called party (30) or by a user of a terminal device (31) associated with the called party (30) or by another party of the telecommunications network (100), the input information being related to the first identification information (201) only, or to both the first identification information (201) and the second identification information (202),
-- the name-related information (202) is transmitted to the telecommunications network (100) of the called party (30) or within the telecommunications network (100) or to the service node (130) of the telecommunications network (100) of the called party (30) or to the called party (30) in view of being output as an audible output by the terminal device (31) associated with the called party (30).

9. Telecommunications network (100) according to claim 8, wherein the telecommunications network (100) is configured such that the name-related information (202) is determined by means of a reverse search based on the first identification information (201).

10. Telecommunications network (100) according to claims 8 or 9, wherein the telecommunications network (100) is configured such that the name-related information (202) is determined based on the input information - especially related to a previously occurred call - provided by the called party (30) or by the user of the terminal device (31) associated with the called party (30), wherein the input information is related to:
-- the first identification information (201) only, or
-- to both the first identification information (201) and the second identification information (202), and
wherein the input information is stored as the name-related information (202) by the telecommunications network (100) of the called party (30) or by the service node (130) of the telecommunications network (100) of the called party (30) or by the called party (30).

11. Telecommunications network (100) according to one of claims 8 to 10, wherein the service node (130) of the telecommunications network (100) is an answering machine service node (130).

12. Telecommunications network (100) according to one of claims 8 to 11, wherein the name-related information (202) corresponds to a speech information that is able to be directly output as the audible output of the terminal device (31) or wherein the name-related information (202) corresponds to a text information that is transmitted to the telecommunications network (100) of the called party (30) or to the service node (130) of the telecommunications network (100) of the called party (30) or to the called party (30), wherein the telecommunications network (100) is configured such that a speech information is generated, based on the text information, by a synthesizing entity or by a synthesizing module either
-- of the telecommunications network (100) of the called party (30), or
-- of the service node (130) of the telecommunications network (100) of the called party (30), or
-- of the called party (30).

13. Program comprising a computer readable program code which, when executed on a computer and/or on a network node of a telecommunications network (100), and/or on a service node (130) of the telecommunications network (100), especially an answering machine service node (130), and/or on a terminal device (31) associated with the called party (30), especially in part on the network node of the telecommunications network (100) and/or in part on the service node (130) of the telecommunications network (100) and/or in part on the terminal device (31) associated with the called party (30), causes the computer and/or the network node of the telecommunications network (100) and/or the service node (130) of the telecommunications network (100), and/or the terminal device (31) associated with the called party (30) to perform a method according one of claims 1 to 7.

14. Computer program product for an enhanced call answering and/or call handling functionality related to a called party (30) in a telecommunications network (100), the computer program product comprising a computer program stored on a storage medium, the computer program comprising program code which, when executed on a computer and/or on a network node of a telecommunications network (100), and/or on a service node (130) of the telecommunications network (100), especially an answering machine service node (130), and/or on a terminal device (31) associated with the called party (30), especially in part on the network node of the telecommunications network (100) and/or in part on the service node (130) of the telecommunications network (100) and/or in part on the terminal device (31) associated with the called party (30), causes the computer and/or the network node of the telecommunications network (100) and/or the service node (130) of the telecommunications network (100), and/or the terminal device (31) associated with the called party (30) to perform a method according one of claims 1 to 7.

## Patentansprüche

1. Verfahren für eine verbesserte Anrufbeantwortungs- und/oder Rufbehandlungsfunktionalität in Bezug auf einen gerufenen Teilnehmer (30) in einem Telekommunikationsnetz (100), wobei ein Ruf durch einen rufenden Teilnehmer (20) initiiert wird,
wobei der Ruf an den gerufenen Teilnehmer (30) gerichtet ist, wobei der Ruf durch Senden einer Rufinitiierungsnachricht an das Telekommunikationsnetz (100) des gerufenen Teilnehmers (30) oder innerhalb des Telekommunikationsnetzes (100) initiiert wird, wobei insbesondere der gerufene Teilnehmer (30) den Ruf nicht entgegennehmen kann,
wobei eine erste Identifizierungsinformation (201) dem rufenden Teilnehmer (20) zugeordnet oder mit diesem verknüpft wird und wobei eine zweite Identifizierungsinformation (301) dem gerufenen Teilnehmer (30) zugeordnet oder mit diesem verknüpft wird,
wobei das Initiieren des Rufs das Senden der ersten Identifizierungsinformation (201) an das Telekommunikationsnetz (100) des gerufenen Teilnehmers (30) oder innerhalb des Telekommunikationsnetzes (100) oder an einen Dienstknoten (130) des Telekommunikationsnetzes (100) des gerufenen Teilnehmers (30) oder an den gerufenen Teilnehmer (30) umfasst,
wobei das Verfahren die folgenden Schritte umfasst:
- in einem ersten Schritt wird die Rufinitiierungsnachricht durch das Telekommunikationsnetz (100) oder innerhalb des Telekommunikationsnetzes (100) empfangen, und die erste Identifizierungsinformation (201) wird durch das Telekommunikationsnetz (100) des gerufenen Teilnehmers (30) oder durch den Dienstknoten (130) des Telekommunikationsnetzes (100) des gerufenen Teilnehmers (30) oder durch den gerufenen Teilnehmer (30) empfangen, und der Ruf wird an den Dienstknoten (130) des Telekommunikationsnetzes (100) weitergeleitet, wobei der Dienstknoten (130) ein Anrufbeantworter-Dienstknoten (130) ist,
- in einem zweiten Schritt, im Anschluss an den ersten Schritt, wird eine namenbezogene Information (202) bestimmt, wobei die namenbezogene Information (202)
- sowohl von der ersten Identifizierungsinformation (201) als auch von der zweiten Identifizierungsinformation (301) abhängig ist oder
- sich auf eine Eingabeinformation bezieht, die durch den gerufenen Teilnehmer (30) oder durch einen Benutzer eines Endgerätes (31), das mit dem gerufenen Teilnehmer (30) verknüpft ist, bereitgestellt wird, wobei sich die Eingabeinformation nur auf die erste Identifizierungsinformation (201) oder sowohl auf die erste Identifizierungsinformation (201) als auch auf die zweite Identifizierungsinformation (202) bezieht,
- in einem dritten Schritt, im Anschluss an den zweiten Schritt, wird die namenbezogene Information (202) an das Telekommunikationsnetz (100) des gerufenen Teilnehmers (30) oder an den Dienstknoten (130) des Telekommunikationsnetzes (100) des gerufenen Teilnehmers (30) oder an den gerufenen Teilnehmer (30) gesendet, um durch das mit dem gerufenen Teilnehmer (30) verknüpfte Endgerät (31) als eine hörbare Ausgabe ausgegeben zu werden.

2. Verfahren nach Anspruch 1, wobei die namenbezogene Information (202) mittels einer Rückwärtssuche auf der Grundlage der ersten Identifizierungsinformation (201) bestimmt wird.

3. Verfahren nach einem der vorangehenden Ansprüche, wobei die namenbezogene Information (202) auf der Grundlage der Eingabeinformation - insbesondere in Bezug auf einen zuvor stattgefundenen Ruf - bestimmt wird, die durch den gerufenen Teilnehmer (30) oder durch den Benutzer des Endgerätes (31), das mit dem gerufenen Teilnehmer (30) verknüpft ist, bereitgestellt wird, wobei sich die Eingabeinformation bezieht auf:
- nur die erste Identifizierungsinformation (201) oder
- sowohl auf die erste Identifizierungsinformation (201) als auch auf die zweite Identifizierungsinformation (202), und
wobei die Eingabeinformation als die namenbezogene Information (202) durch das Telekommunikationsnetz (100) des gerufenen Teilnehmers (30) oder durch den Dienstknoten (130) des Telekommunikationsnetzes (100) des gerufenen Teilnehmers (30) oder durch den gerufenen Teilnehmer (30) gespeichert wird.

4. Verfahren nach einem der vorangehenden Ansprüche, wobei die Eingabeinformation durch den gerufenen Teilnehmer (30) oder durch den Benutzer des Endgerätes (31), das mit dem gerufenen Teilnehmer (30) verknüpft ist, entweder in Form einer Sprachinformation oder in Form einer Textinformation eingegeben wird, und wobei für den Fall, dass die Eingabeinformation in Form einer Textinformation eingegeben wird, die Eingabeinformation als eine Sprachinformation oder als eine Textinformation gespeichert wird.

5. Verfahren nach einem der vorangehenden Ansprüche, wobei die namenbezogene Information (202) einer Sprachinformation entspricht, die direkt als die hörbare Ausgabe des Endgerätes (31) ausgegeben werden kann.

6. Verfahren nach einem der vorangehenden Ansprüche, wobei die namenbezogene Information (202) einer Textinformation entspricht, die an das Telekommunikationsnetz (100) des gerufenen Teilnehmers (30) oder an den Dienstknoten (130) des Telekommunikationsnetzes (100) des gerufenen Teilnehmers (30) oder an den gerufenen Teilnehmer (30) gesendet wird, wobei eine Sprachinformation auf der Grundlage der Textinformation durch eine Syntheseentität oder durch ein Synthesemodul entweder
- des Telekommunikationsnetzes (100) des gerufenen Teilnehmers (30) oder
- des Dienstknotens (130) des Telekommunikationsnetzes (100) des gerufenen Teilnehmers (30) oder
- des gerufenen Teilnehmers (30)
generiert wird.

7. Verfahren zum Speichern einer Eingabeinformation im Hinblick auf die Durchführung eines Verfahrens nach einem der vorangehenden Ansprüche und insbesondere im Hinblick auf die Bestimmung der namenbezogenen Information (202) gemäß dem zweiten Schritt auf der Grundlage einer Eingabeinformation, wobei die Eingabeinformation - vor dem Ruf - durch den gerufenen Teilnehmer (30) oder durch den Benutzer des Endgerätes (31), das mit dem gerufenen Teilnehmer (30) verknüpft ist, oder durch einen anderen Teilnehmer des Telekommunikationsnetzes (100) bereitgestellt wird, wobei sich die Eingabeinformation auf Folgendes bezieht:
- nur die erste Identifizierungsinformation (201) oder
- sowohl auf die erste Identifizierungsinformation (201) als auch auf die zweite Identifizierungsinformation (202), und
wobei die Eingabeinformation als die namenbezogene Information (202) durch das Telekommunikationsnetz (100) des gerufenen Teilnehmers (30) oder durch den Dienstknoten (130) des Telekommunikationsnetzes (100) des gerufenen Teilnehmers (30) oder durch den gerufenen Teilnehmer (30) gespeichert wird.

8. Telekommunikationsnetz (100) für eine verbesserte Anrufbeantwortungs- und/oder Rufbehandlungsfunktionalität in Bezug auf einen gerufenen Teilnehmer (30), wobei ein Ruf durch einen rufenden Teilnehmer (20) initiiert wird, wobei der Ruf an den gerufenen Teilnehmer (30) gerichtet ist, wobei der Ruf durch Senden einer Rufinitiierungsnachricht an das Telekommunikationsnetz (100) des gerufenen Teilnehmers (30) oder innerhalb des Telekommunikationsnetzes (100) initiiert wird, wobei insbesondere der gerufene Teilnehmer (30) den Ruf nicht entgegennehmen kann,
wobei eine erste Identifizierungsinformation (201) dem rufenden Teilnehmer (20) zugeordnet oder mit diesem verknüpft wird und wobei eine zweite Identifizierungsinformation (301) dem gerufenen Teilnehmer (30) zugeordnet oder mit diesem verknüpft wird,
wobei das Initiieren des Rufs das Senden der ersten Identifizierungsinformation (201) an das Telekommunikationsnetz (100) des gerufenen Teilnehmers (30) oder innerhalb des Telekommunikationsnetzes (100) oder an einen Dienstknoten (130) des Telekommunikationsnetzes (100) des gerufenen Teilnehmers (30) oder an den gerufenen Teilnehmer (30) umfasst,
wobei das Mobilkommunikationsnetz (100) so eingerichtet ist, dass:
- die Rufinitiierungsnachricht durch das Telekommunikationsnetz (100) oder innerhalb des Telekommunikationsnetzes (100) empfangen wird und die erste Identifizierungsinformation (201) durch das Telekommunikationsnetz (100) des gerufenen Teilnehmers (30) oder durch den Dienstknoten (130) des Telekommunikationsnetzes (100) des gerufenen Teilnehmers (30) oder durch den gerufenen Teilnehmer (30) empfangen wird und der Ruf an den Dienstknoten (130) des Telekommunikationsnetzes (100) weitergeleitet wird, wobei der Dienstknoten (130) ein Anrufbeantworter-Dienstknoten (130) ist,
- eine namenbezogene Information (202) bestimmt wird, wobei die namenbezogene Information (202)
- sowohl von der ersten Identifizierungsinformation (201) als auch von der zweiten Identifizierungsinformation (301) abhängig ist oder
- sich auf eine Eingabeinformation bezieht, die durch den gerufenen Teilnehmer (30) oder durch einen Benutzer eines Endgerätes (31), das mit dem gerufenen Teilnehmer (30) verknüpft ist, oder durch einen anderen Teilnehmer des Telekommunikationsnetzes (100) bereitgestellt wird, wobei sich die Eingabeinformation nur auf die erste Identifizierungsinformation (201) oder sowohl auf die erste Identifizierungsinformation (201) als auch auf die zweite Identifizierungsinformation (202) bezieht,
- die namenbezogene Information (202) an das Telekommunikationsnetz (100) des gerufenen Teilnehmers (30) oder innerhalb des Telekommunikationsnetzes (100) oder an den Dienstknoten (130) des Telekommunikationsnetzes (100) des gerufenen Teilnehmers (30) oder an den gerufenen Teilnehmer (30) gesendet wird, um durch das mit dem gerufenen Teilnehmer (30) verknüpfte Endgerät (31) als eine hörbare Ausgabe ausgegeben zu werden.

9. Telekommunikationsnetz (100) nach Anspruch 8, wobei das Telekommunikationsnetz (100) so eingerichtet ist, dass die namenbezogene Information (202) mittels einer Rückwärtssuche auf der Grundlage der ersten Identifizierungsinformation (201) bestimmt wird.

10. Telekommunikationsnetz (100) nach den Ansprüchen 8 oder 9, wobei das Telekommunikationsnetz (100) so eingerichtet ist, dass die namenbezogene Information (202) auf der Grundlage der Eingabeinformation - insbesondere in Bezug auf einen zuvor stattgefundenen Ruf - bestimmt wird, die durch den gerufenen Teilnehmer (30) oder durch den Benutzer des Endgerätes (31), das mit dem gerufenen Teilnehmer (30) verknüpft ist, bereitgestellt wird, wobei sich die Eingabeinformation bezieht auf:
- nur die erste Identifizierungsinformation (201) oder
- sowohl auf die erste Identifizierungsinformation (201) als auch auf die zweite Identifizierungsinformation (202), und
wobei die Eingabeinformation als die namenbezogene Information (202) durch das Telekommunikationsnetz (100) des gerufenen Teilnehmers (30) oder durch den Dienstknoten (130) des Telekommunikationsnetzes (100) des gerufenen Teilnehmers (30) oder durch den gerufenen Teilnehmer (30) gespeichert wird.

11. Telekommunikationsnetz (100) nach einem der Ansprüche 8 bis 10, wobei der Dienstknoten (130) des Telekommunikationsnetzes (100) ein Anrufbeantworter-Dienstknoten (130) ist.

12. Telekommunikationsnetz (100) nach einem der Ansprüche 8 bis 11, wobei die namenbezogene Information (202) einer Sprachinformation entspricht, die direkt als die hörbare Ausgabe des Endgerätes (31) ausgegeben werden kann, oder wobei die namenbezogene Information (202) einer Textinformation entspricht, die an das Telekommunikationsnetz (100) des gerufenen Teilnehmers (30) oder an den Dienstknoten (130) des Telekommunikationsnetzes (100) des gerufenen Teilnehmers (30) oder an den gerufenen Teilnehmers (30) gesendet wird, wobei das Telekommunikationsnetz (100) so eingerichtet ist, dass eine Sprachinformation auf der Basis der Textinformation durch eine Syntheseentität oder durch ein Synthesemodul entweder
- des Telekommunikationsnetzes (100) des gerufenen Teilnehmers (30) oder
- des Dienstknotens (130) des Telekommunikationsnetzes (100) des gerufenen Teilnehmers (30) oder
- des gerufenen Teilnehmers (30)
erzeugt wird.

13. Programm, umfassend einen computerlesbaren Programmcode, der, wenn er auf einem Computer und/oder in einem Netzknoten eines Telekommunikationsnetzes (100) und/oder in einem Dienstknoten (130) des Telekommunikationsnetzes (100), insbesondere einem Anrufbeantworter-Dienstknoten (130), und/oder in einem Endgerät (31), das mit dem gerufenen Teilnehmer (30) verknüpft ist, ausgeführt wird, insbesondere teilweise in dem Netzknoten des Telekommunikationsnetzes (100) und/oder teilweise in dem Dienstknoten (130) des Telekommunikationsnetzes (100) und/oder teilweise in dem Endgerät (31), das mit dem gerufenen Teilnehmer (30) verknüpft ist, den Computer und/oder den Netzknoten des Telekommunikationsnetzes (100) und/oder den Dienstknoten (130) des Telekommunikationsnetzes (100) und/oder das Endgerät (31), das mit dem gerufenen Teilnehmer (30) verknüpft ist, veranlasst, ein Verfahren nach einem der Ansprüche 1 bis 7 durchzuführen.

14. Computerprogrammprodukt für eine erweiterte Anrufbeantwortungs- und/oder Rufbehandlungsfunktionalität in Bezug auf einen gerufenen Teilnehmer (30) in einem Telekommunikationsnetz (100), wobei das Computerprogrammprodukt ein auf einem Speichermedium gespeichertes Computerprogramm umfasst, wobei das Computerprogramm Programmcode umfasst, der, wenn er auf einem Computer und/oder in einem Netzknoten eines Telekommunikationsnetzes (100) und/oder in einem Dienstknoten (130) des Telekommunikationsnetzes (100), insbesondere einem Anrufbeantworter-Dienstknoten (130), und/oder in einem Endgerät (31), das mit dem gerufenen Teilnehmer (30) verknüpft ist, ausgeführt wird, insbesondere teilweise in dem Netzknoten des Telekommunikationsnetzes (100) und/oder teilweise in dem Dienstknoten (130) des Telekommunikationsnetzes (100) und/oder teilweise in dem Endgerät (31), das mit dem gerufenen Teilnehmer (30) verknüpft ist, den Computer und/oder den Netzknoten des Telekommunikationsnetzes (100) und/oder den Dienstknoten (130) des Telekommunikationsnetzes (100) und/oder das Endgerät (31), das mit dem gerufenen Teilnehmer (30) verknüpft ist, veranlasst, ein Verfahren nach einem der Ansprüche 1 bis 7 durchzuführen.

## Revendications

1. Procédé pour une fonctionnalité de réponse d'appel et/ou de traitement d'appel améliorée associée à un appelé (30) dans un réseau de télécommunication (100), dans lequel un appel est initié par un appelant (20), l'appel étant dirigé vers l'appelé (30), dans lequel l'appel est initié au moyen de la transmission d'un message d'initiation d'appel au réseau de télécommunication (100) de l'appelé (30) ou dans le réseau de télécommunication (100), dans lequel en particulier l'appelé (30) n'est pas en mesure de prendre l'appel,
dans lequel une première information d'identification (201) est assignée ou associée à l'appelant (20), et dans lequel une seconde information d'identification (301) est assignée ou associée à l'appelé (30),
dans lequel l'initiation de l'appel implique la transmission de la première information d'identification (201) au réseau de télécommunication (100) de l'appelé (30) ou dans le réseau de télécommunication (100), ou à un nœud de service (130) du réseau de télécommunication (100) de l'appelé (30), ou à l'appelé (30), dans lequel le procédé comprend les étapes suivantes :
- dans une première étape, le message d'initiation d'appel est reçu par le réseau de télécommunication (100) ou dans le réseau de télécommunication (100), et la première information d'identification (201) est reçue par le réseau de télécommunication (100) de l'appelé (30) ou par le nœud de service (130) du réseau de télécommunication (100) de l'appelé (30) ou par l'appelé (30), et l'appel est transmis au nœud de service (130) du réseau de télécommunication (100), et le nœud de service (130) étant un nœud de service de répondeur (130),
- dans une deuxième étape, subséquente à la première étape, une information liée au nom (202) est déterminée, l'information liée au nom (202)
- dépendant à la fois la première information d'identification (201) et de la seconde information d'identification (301), ou
- étant liée à une information d'entrée fournie par l'appelé (30) ou par un utilisateur d'un dispositif terminal (31) associé à l'appelé (30), l'information d'entrée étant liée à la première information d'identification (201) seulement, ou à la fois à la première information d'identification (201) et à la seconde information d'identification (202),
- dans une troisième étape, subséquente à la deuxième étape, l'information liée au nom (202) est transmise au réseau de télécommunication (100) de l'appelé (30) ou au nœud de service (130) du réseau de télécommunication (100) de l'appelé (30) ou à l'appelé (30) en vue d'être sortie sous forme de sortie audible par le dispositif terminal (31) associé à l'appelé (30).

2. Procédé selon la revendication 1, dans lequel l'information liée au nom (202) est déterminée au moyen d'une recherche inversée basée sur la première information d'identification (201).

3. Procédé selon l'une quelconque des revendications précédentes, dans lequel l'information liée au nom (202) est déterminée sur la base de l'information d'entrée - liée en particulier à un appel ayant déjà eu lieu - fournie par l'appelé (30) ou par l'utilisateur du dispositif terminal (31) associé à l'appelé (30), dans lequel l'information d'entrée est liée :
- à la première information d'identification (201) seulement, ou
- à la fois à la première information d'identification (201) et à la seconde information d'identification (202), ou
dans lequel l'information d'entrée est stockée en tant que l'information liée au nom (202) par le réseau de télécommunication (100) de l'appelé (30) ou par le nœud de service (130) du réseau de télécommunication (100) de l'appelé (30) ou par l'appelé (30).

4. Procédé selon l'une quelconque des revendications précédentes, dans lequel l'information d'entrée est entrée par l'appelé (30) ou par l'utilisateur du dispositif terminal (31) associé à l'appelé (30), soit sous forme d'une information vocale, soit sous forme d'une information textuelle, et dans lequel - dans le cas où l'information d'entrée est entrée sous la forme d'une information textuelle - l'information d'entrée est stockée en tant qu'information vocale ou en tant qu'information textuelle.

5. Procédé selon l'une quelconque des revendications précédentes, dans lequel l'information liée au nom (202) correspond à une information vocale qui peut être directement sortie en tant que la sortie audible du dispositif terminal (31).

6. Procédé selon l'une quelconque des revendications précédentes, dans lequel l'information liée au nom (202) correspond à une information textuelle qui est transmise au réseau de télécommunication (100) de l'appelé (30) ou au nœud de service (130) du réseau de télécommunication (100) de l'appelé (30) ou à l'appelé (30), dans lequel une information vocale est générée, sur la base de l'information textuelle, par une entité de synthèse ou par un module de synthèse soit
- du réseau de télécommunication (100) de l'appelé (30), soit
- du nœud de service (130) du réseau de télécommunication (100) de l'appelé (30), soit
- de l'appelé (30).

7. Procédé de stockage d'une information d'entrée en vue de réaliser un procédé selon l'une quelconque des revendications précédentes, et en particulier en vue de déterminer l'information liée au nom (202), selon la deuxième étape, sur la base d'une information d'entrée, dans lequel l'information d'entrée est fournie, préalablement à l'appel, par l'appelé (30) ou par l'utilisateur du dispositif terminal (31) associé à l'appelé (30) ou par un autre correspondant du réseau de télécommunication (100), dans lequel l'information d'entrée est liée :
- à la première information d'identification (201) seulement, ou
- à la fois à la première information d'identification (201) et à la seconde information d'identification (202), ou
dans lequel l'information d'entrée est stockée en tant que l'information liée au nom (202) par le réseau de télécommunication (100) de l'appelé (30) ou par le nœud de service (130) du réseau de télécommunication (100) de l'appelé (30) ou par l'appelé (30).

8. Réseau de télécommunication (100) pour une fonctionnalité de réponse d'appel et/ou de traitement d'appel améliorée associée à un appelé (30), dans lequel un appel est initié par un appelant (20), l'appel étant dirigé vers l'appelé (30), dans lequel l'appel est initié au moyen de la transmission d'un message d'initiation d'appel au réseau de télécommunication (100) de l'appelé (30) ou dans le réseau de télécommunication (100), dans lequel en particulier l'appelé (30) n'est pas en mesure de prendre l'appel,
dans lequel une première information d'identification (201) est assignée ou associée à l'appelant (20) et dans lequel une seconde information d'identification (301) est assignée ou associée à l'appelé (30),
dans lequel l'initiation de l'appel implique la transmission de la première information d'identification (201) au réseau de télécommunication (100) de l'appelé (30) ou dans le réseau de télécommunication (100), ou à un nœud de service (130) du réseau de télécommunication (100) de l'appelé (30), ou à l'appelé (30), dans lequel le réseau de télécommunication (100) est configuré de telle sorte que :
- le message d'initiation d'appel est reçu par le réseau de télécommunication (100) ou dans le réseau de télécommunication (100), et la première information d'identification (201) est reçue par le réseau de télécommunication (100) de l'appelé (30) ou par le nœud de service (130) du réseau de télécommunication (100) de l'appelé (30) ou par l'appelé (30), et l'appel étant transmis au nœud de service (130) du réseau de télécommunication (100), et le nœud de service (130) étant un nœud de service de répondeur (130),
- une information liée au nom (202) est déterminée, l'information liée au nom (202)
- dépendant à la fois la première information d'identification (201) et de la seconde information d'identification (301), ou
- étant liée à une information d'entrée fournie par l'appelé (30) ou par un utilisateur d'un dispositif terminal (31) associé à l'appelé (30), ou par un autre correspondant du réseau de télécommunication (100), l'information d'entrée étant liée à la première information d'identification (201) seulement, ou à la fois la première information d'identification (201) et à la seconde information d'identification (202),
- l'information liée au nom (202) est transmise au réseau de télécommunication (100) de l'appelé (30) ou dans le réseau de télécommunication (100) ou au nœud de service (130) du réseau de télécommunication (100) de l'appelé (30) ou à l'appelé (30) en vue d'être sortie sous forme de sortie audible par le dispositif terminal (31) associé à l'appelé (30).

9. Réseau de télécommunication (100) selon la revendication 8, dans lequel le réseau de télécommunication (100) est configuré de telle sorte que l'information liée au nom (202) est déterminée au moyen d'une recherche inversée basée sur la première information d'identification (201).

10. Réseau de télécommunication (100) selon la revendication 8 ou 9, dans lequel le réseau de télécommunication (100) est configuré de telle sorte que l'information liée au nom (202) est déterminée sur la base de l'information d'entrée - liée en particulier à un appel ayant déjà eu lieu - fournie par l'appelé (30) ou par l'utilisateur du dispositif terminal (31) associé à l'appelé (30), dans lequel l'information d'entrée est liée :
- à la première information d'identification (201) seulement, ou
- à la fois à la première information d'identification (201) et à la seconde information d'identification (202), ou
dans lequel l'information d'entrée est stockée en tant que l'information liée au nom (202) par le réseau de télécommunication (100) de l'appelé (30) ou par le nœud de service (130) du réseau de télécommunication (100) de l'appelé (30) ou par l'appelé (30).

11. Réseau de télécommunication (100) selon l'une quelconque des revendications 8 à 10, dans lequel le nœud de service (130) du réseau de télécommunication (100) est un nœud de service de répondeur (130).

12. Réseau de télécommunication (100) selon l'une quelconque des revendications 8 à 11, dans lequel l'information liée au nom (202) correspond à une information vocale qui peut être directement sortie en tant que la sortie audible du dispositif terminal (31) ou dans lequel l'information liée au nom (202) correspond à une information textuelle qui est transmise au réseau de télécommunication (100) de l'appelé (30) ou au nœud de service (130) du réseau de télécommunication (100) de l'appelé (30) ou à l'appelé (30), dans lequel le réseau de télécommunication (100) est configuré de telle sorte qu'une information vocale est générée, sur la base de l'information textuelle, par une entité synthèse ou par un module de synthèse, soit
- du réseau de télécommunication (100) de l'appelé (30), soit
- du nœud de service (130) du réseau de télécommunication (100) de l'appelé (30), soit
- de l'appelé (30).

13. Programme comprenant un code de programme lisible par ordinateur qui, lorsqu'il est exécuté sur un ordinateur et/ou sur un nœud de réseau d'un réseau de télécommunication (100), et/ou sur un nœud de service (130) du réseau de télécommunication (100), en particulier un nœud de service de répondeur (130), et/ou sur un dispositif terminal (31) associé à l'appelé (30), en particulier en partie sur le nœud de réseau du réseau de télécommunication (100) et/ou en partie sur le nœud de service (130) du réseau de télécommunication (100) et/ou en partie sur le dispositif terminal (31) associé à l'appelé (30), amène l'ordinateur et/ou le nœud de réseau du réseau de télécommunication (100) et/ou le nœud de service (130) du réseau de télécommunication (100), et/ou le dispositif terminal (31) associé à l'appelé (30) à effectuer un procédé selon l'une des revendications 1 à 7.

14. Produit de programme d'ordinateur pour une fonctionnalité de réponse d'appel et/ou de traitement d'appel améliorée associée à un appelé (30) dans un réseau de télécommunication (100), le produit de programme d'ordinateur comprenant un programme d'ordinateur stocké sur un support de stockage, le programme d'ordinateur comprenant un code de programme qui, lorsqu'il est exécuté sur un ordinateur et/ou sur un nœud de réseau d'un réseau de télécommunication (100), et/ou sur un nœud de service (130) du réseau de télécommunication (100), en particulier un nœud de service de répondeur (130), et/ou sur un dispositif terminal (31) associé à l'appelé (30), en particulier en partie sur le nœud de réseau du réseau de télécommunication (100) et/ou en partie sur le nœud de service (130) du réseau de télécommunication (100) et/ou en partie sur le dispositif terminal (31) associé à l'appelé (30), amène l'ordinateur et/ou le nœud de réseau du réseau de télécommunication (100) et/ou le nœud de service (130) du réseau de télécommunication (100), et/ou le dispositif terminal (31) associé à l'appelé (30) à effectuer un procédé selon l'une des revendications 1 à 7.
